# EUROPEAN PATENT SPECIFICATION

(11) **EP 4 040 662 B1**
(45) Date of publication and mention of the grant of the patent: **25.09.2024**
(21) Application number: 19951036.3
(22) Date of filing: 01.11.2019
(51) Int. Cl.: H02M 3/156, H02M 1/00

(54) **SWITCH MODE POWER SUPPLY CONVERTER**
SCHALTNETZTEIL-STROMWANDLER
CONVERTISSEUR D'ALIMENTATION EN MODE DE COMMUTATION

(30) Priority: 31.10.2019 WO PCT/CN2019/114773
(43) Date of publication of application: 10.08.2022
(73) Proprietor: Huawei Technologies Co., Ltd., Longgang District Shenzhen, Guangdong 518129 (CN)
(72) Inventor: WANG, Yi, Shenzhen, Guangdong 518129 (CN); HENG, Caofei, Shenzhen, Guangdong 518129 (CN); WU, Wei, Shenzhen, Guangdong 518129 (CN); HUANG, Chen, Shenzhen, Guangdong 518129 (CN)
(74) Representative: Isarpatent
(86) International application number: PCT/CN2019/115123
(87) International publication number: WO 2021/082000

(56) References cited:
- WO-A1-2017/067174
- CN-A- 102 013 820
- CN-A- 103 956 896
- CN-A- 106 533 154
- CN-A- 106 533 154
- CN-A- 106 612 070
- CN-A- 109 450 485
- US-A1- 2015 311 798
- US-B1- 7 583 138
- US-B1- 8 330 437
- US-B2- 8 786 269
- ROH J: "High-Performance Error Amplifier for Fast Transient DC-DC Converters", IEEE TRANSACTIONS ON CIRCUITS AND SYSTEMS II: ANALOG AND DIGITAL SIGNAL PROCESSING, INSTITUTE OF ELECTRICAL AND ELECTRONICS ENGINEERS INC, 345 EAST 47 STREET , NEW YORK N Y 10017 , USA, vol. 52, no. 9, 1 September 2005 (2005-09-01), pages 591 - 595, XP011139415, ISSN: 1057-7130, DOI: 10.1109/TCSII.2005.850521
- HONG-WEI HUANG ET AL: "Fast Transient DC-DC Converter with On-Chip Compensated Error Amplifier", SOLID-STATE CIRCUITS CONFERENCE, 2006. ESSCIRC 2006. PROCEEDINGS OF THE 32ND EUROPEAN, IEEE, PISCATAWAY, NJ, USA, 1 September 2006 (2006-09-01), pages 324 - 327, XP031046917, ISBN: 978-1-4244-0303-5, DOI: 10.1109/ESSCIR.2006.307596
- SUH JUNG-DUK ET AL: "A Fast Response PWM Buck Converter With Active Ramp Tracking Control in a Load Transient Period", IEEE TRANSACTIONS ON CIRCUITS AND SYSTEMS II: EXPRESS BRIEFS, IEEE, USA, vol. 66, no. 3, 1 March 2019 (2019-03-01), pages 467 - 471, XP011712402, ISSN: 1549-7747, [retrieved on 20190225], DOI: 10.1109/TCSII.2018.2865643

## Description

### TECHNICAL FIELD

This disclosure generally relates to the circuit field, and the invention in particular relates to switching power supply converters.

### BACKGROUND

Currently, a switching power supply converter is used in many circuits to improve conversion efficiency of a circuit power supply. However, in a circuit of the switching power supply converter, when load of the switching power supply converter instantly jumps from light load to heavy load, an output voltage of the switching power supply converter drops rapidly, and performance of an electronic product system degrades.

In a conventional technology, a manner of improving a transient feature of a switching power supply converter is as follows. For example, when load of the switching power supply converter is light load, the switching power supply converter is forced to work in a pulse width modulation (PWM) mode and a quantity of output capacitors increases, to restore and maintain stability of an output voltage of the switching power supply converter. Alternatively, non-linear detection control is performed on an output voltage of the switching power supply converter, to restore and maintain stability of the output voltage of the switching power supply converter. However, the transient feature of the switching power supply converter is barely improved by using the foregoing method, and conversion efficiency decreases, or capacitor costs increase.

For example, WO 2017/067174 A1 discloses switching power supply converter including a ramp generator, a load detection circuit, and an error amplifier.

Furthermore, the paper "ROH J: "High-Performance Error Amplifier for Fast Transient DC-DC Converters", IEEE TRANSACTIONS ON CIRCUITS AND SYSTEMS II: ANALOG AND DIGITAL SIGNAL PROCESSING, INSTITUTE OF ELECTRICAL AND ELECTRONICS ENGINEERS INC, 345 EAST 47 STREET, NEW YORK NY 10017 , USA, vol. 52, no. 9, 1 September 2005 (2005-09-01), pages 591-595, XP011139415, ISSN: 1057-7130, DOI: 10.1 109/TCSII.2005.850521" discloses an error amplifier for fast transient response of dc-dc converters. The amplifier has low quiescent current to achieve high power conversion efficiency, but it can supply sufficient current during large-signal operation. Two comparators detect large-signal variations, and turn on extra current supplier if necessary. The amount of extra current is controlled, so that system stability can be guaranteed in various operating conditions.

Similar error amplifiers are disclosed in the paper "HONG-WEI HUANG ET AL: "Fast Transient DC-DC Converter with On-Chip Compensated Error Amplifier", SOLID-STATE CIRCUITS CONFERENCE, 2006. ESSCIRC 2006. PROCEEDINGS OF THE 32ND EUROPEAN, IEEE, PISCATAWAY, NJ, USA, 1 September 2006 (2006-09-01), pages 324-327, XP031046917" DOI: 10.1 109/ESSCIR. 2006. 307596 ISBN: 978-1-4244-0303-5 and in the paper "SUM JUNG-DUK ET AL: "A Fast Response PWM Buck Converter With Active Ramp Tracking Control in a Load Transient Period", IEEE TRANSACTIONS ON CIRCUITS AND SYSTEMS II: EXPRESS BRIEFS, IEEE, USA, vol. 66, no. 3, 1 March 2019 (2019-03-01), pages 467-471, XP011712402, ISSN: 1549-7747, DOI: 10.11 09/TCSI 1.201 8.2865643.

Furthermore, US 7583 138 B1 discloses yet another system an method for controlling an error amplifier between control mode changes.

### SUMMARY

The object of the present invention is to improve transient features of a switching power supply converter when its output changes. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides a switching power supply converter, including: a triangular wave generator, where an input end of the triangular wave generator is configured to receive a clock signal; and a load detection circuit, where an input end of the load detection circuit is electrically connected to an output end of the switching power supply converter, a first output end of the load detection circuit is electrically connected to a control end of the triangular wave generator, and the load detection circuit is configured to control, based on an output of the switching power supply converter, an amplitude of a triangular wave signal output by the triangular wave generator.

Compared with a fixed amplitude of a triangular wave signal of a conventional switching power supply converter, the amplitude of the triangular wave signal output by the triangular wave generator is controlled based on the output of the switching power supply converter in embodiments of this application. When an output voltage of the switching power supply converter drops, the switching power supply converter provided in embodiments of this application can restore the output voltage more quickly.

According to the invention, the switching power supply converter further includes an error amplifier EA. A second output end of the load detection circuit is electrically connected to a control end of the EA, and the load detection circuit is further configured to control, based on the output of the switching power supply converter, a response speed of a signal output by the EA.

Compared with a signal output by an EA in the conventional switching power supply converter, the signal, output by the EA, that is controlled based on the output of the switching power supply converter has a high response speed. When the output voltage of the switching power supply converter drops, the switching power supply converter provided in embodiments of this application can restore the output voltage more quickly.

According to the invention, the load detection circuit includes a first hysteresis comparator and a second hysteresis comparator. A first input end of the first hysteresis comparator is configured to receive a first detection voltage, a second input end of the first hysteresis comparator is configured to receive a first reference voltage, an output end of the first hysteresis comparator is configured to output a first signal, and the first detection voltage is a voltage obtained after the load detection circuit converts a received output current of the switching power supply converter. A first input end of the second hysteresis comparator is configured to receive a second detection voltage, a second input end of the second hysteresis comparator is configured to receive a second reference voltage, an output end of the second hysteresis comparator is configured to output a second signal, the second detection voltage is a voltage obtained by filtering the first detection voltage, the second reference voltage is less than or equal to the first reference voltage, the first signal and the second signal are configured to control the amplitude of the triangular wave signal output by the triangular wave generator, and the signal output by the EA.

In embodiments of this application, the first reference voltage may have one or more values, and the second reference voltage may have one or more values. According to the invention, the load detection circuit further includes a current detection circuit and a logic controller. An input end of the current detection circuit is electrically connected to the output end of the switching power supply converter, an output end of the current detection circuit is electrically connected to the first hysteresis comparator and the second hysteresis comparator, and the current detection circuit is configured to convert a received output current of the switching power supply converter into the first detection voltage. A first input end of the logic controller is electrically connected to the output end of the first hysteresis comparator, and a second input end of the logic controller is electrically connected to the output end of the second hysteresis comparator. The logic controller is configured to receive the first signal, and generate a fast load detection signal based on the first signal, where the fast load detection signal is a signal output by the load detection circuit when the output current of the switching power supply converter rises rapidly. The logic controller is further configured to receive the second signal, and generate a slow load detection signal based on the second signal, where the slow load detection signal is a signal output by the load detection circuit when the output current of the switching power supply converter rises slowly. The fast load detection signal and the slow load detection signal are input signals of the control end of the triangular wave generator, or input signals of the control end of the EA.

Accuracy of identifying, by the load detection circuit, that the output of the switching power supply converter changes can be improved by introducing the fast load detection signal and the slow load detection signal in embodiments of this application.

In a possible but not claimed implementation, the switching power supply converter may include a plurality of first hysteresis comparators and a plurality of second hysteresis comparators, respectively outputting a plurality of fast load detection signals and a plurality of slow load detection signals. The plurality of fast load detection signals and the plurality of slow load detection signals are used to respectively adjust amplitudes of triangular wave signals corresponding to different load current ranges when the switching power supply converter is in different load current ranges. For example, a process in which the switching power supply converter changes from light load to heavy load may be divided into four load current ranges. In this case, four fast load detection signals and four slow load detection signals output by the switching power supply converter may respectively adjust amplitudes of triangular wave signals in the four load current ranges. This improves accuracy of controlling an amplitude of a triangular wave signal.

With reference to the first aspect, in some implementations of the first aspect, the triangular wave generator includes a variable capacitor, a variable resistor, and a triangular wave signal controller. A first end of the variable resistor is configured to receive the clock signal, a second end of the variable resistor is electrically connected to an output end of the triangular wave generator, and a control end of the variable resistor is electrically connected to an output end of the triangular wave signal controller. A first end of the variable capacitor is electrically connected to the output end of the triangular wave generator, a second end of the variable capacitor is configured to receive an output voltage of the switching power supply converter, and a control end of the variable capacitor is electrically connected to the output end of the triangular wave signal controller. The triangular wave signal controller is configured to adjust a resistance value of the variable resistor and a capacitance value of the variable capacitor based on the fast load detection signal and the slow load detection signal that are received by the control end of the triangular wave generator.

In embodiments of this application, the triangular wave generator may adjust the amplitude of the triangular wave signal segment by segment. Adjusting the amplitude of the triangular wave signal segment by segment may be completed in one clock cycle, or in a plurality of clock cycles.

With reference to the first aspect, in some implementations of the first aspect, the triangular wave generator further includes an operational amplifier. A first input end of the operational amplifier is configured to receive a benchmark voltage, a second input end of the operational amplifier is electrically connected to an output end of the operational amplifier, and the output end of the operational amplifier is electrically connected to the first end of the variable capacitor.

With reference to the first aspect, in some implementations of the first aspect, the triangular wave generator includes an operational amplifier, a variable resistor, a variable current source, a variable current sink, a third switch, a fourth switch, and a triangular wave signal controller. A first input end of the operational amplifier is configured to receive a benchmark voltage, a second input end of the operational amplifier is electrically connected to an output end of the operational amplifier, and the output end of the operational amplifier is electrically connected to an output end of the triangular wave generator. A first end of the variable resistor is electrically connected between the third switch and the fourth switch, a second end of the variable resistor is electrically connected to the output end of the triangular wave generator, and a control end of the variable resistor is electrically connected to an output end of the triangular wave signal controller. A first end of the variable current source receives a fixed voltage, a second end of the variable current source is electrically connected to a second end of the variable current sink, and a control end of the variable current source is electrically connected to a control end of the variable current sink and the output end of the triangular wave signal controller. A first end of the variable current sink is grounded. The third switch and the fourth switch are electrically connected between the second end of the variable current source and the second end of the variable current sink, and the third switch and the fourth switch are switched based on the clock signal. The triangular wave signal controller is configured to adjust a resistance value of the variable resistor, a current value of the variable current source, and a current value of the variable current sink based on the fast load detection signal and the slow load detection signal that are received by the control end of the triangular wave generator.

With reference to the first aspect, in some implementations of the first aspect, the triangular wave generator further includes a first switch and a second switch. The first switch is electrically connected between the variable resistor and a fixed capacitor. The second switch is electrically connected between a direct current voltage input end and the output end of the triangular wave generator. The first switch and the second switch are alternately closed.

With reference to the first aspect, in some not claimed implementations of the first aspect, the load detection circuit is further configured to: increase a gain of a signal output by the EA; or increase a loop bandwidth of a signal output by the EA.

With reference to the first aspect, in some implementations of the first aspect, the EA includes an operational amplifier, a bias current source, a compensation network, and an EA signal controller. A first input end of the operational amplifier is configured to receive an output voltage of the switching power supply converter, a second input end of the operational amplifier is configured to receive a reference voltage, and an output end of the operational amplifier is electrically connected to an output end of the EA. A first end of the compensation network is electrically connected to an output end of the operational amplifier, and a second end of the compensation network is grounded. A third input end of the operational amplifier is electrically connected to the bias current source. The EA signal controller is configured to adjust a bias current of the bias current source and a parameter of the compensation network based on the fast load detection signal and the slow load detection signal that are received by the control end of the EA.

With reference to the first aspect, in some not claimed implementations of the first aspect, the compensation network includes a variable resistor, a first variable capacitor, and a second variable capacitor. A first end of the variable resistor is electrically connected to the output end of the operational amplifier, and a second end of the variable resistor is electrically connected to a first end of the first variable capacitor. A second end of the first variable capacitor is grounded. A first end of the second variable capacitor is electrically connected to the output end of the operational amplifier, and a second end of the second variable capacitor is grounded. A control end of the variable resistor, a control end of the first variable capacitor, and a control end of the second variable capacitor are electrically connected to an output end of the EA signal controller. The fast load detection signal and the slow load detection signal are used to adjust a resistance value of the variable resistor, a capacitance value of the first variable capacitor, and a capacitance value of the second variable capacitor.

According to a second but not claimed aspect, a switching power supply converter is provided, including: a triangular wave generator, where an input end of the triangular wave generator is configured to receive a clock signal; and a load detection circuit, where the load detection circuit includes a first hysteresis comparator and a second hysteresis comparator, an input end of the first hysteresis comparator and an input end of the second hysteresis comparator are electrically connected to an input end of the load detection circuit, and an output end of the first hysteresis comparator and an output end of the second hysteresis comparator are electrically connected to a first output end of the load detection circuit. A first input end of the first hysteresis comparator is configured to receive a first detection voltage, a second input end of the first hysteresis comparator is configured to receive a first reference voltage, and the first detection voltage is a voltage obtained after the load detection circuit converts a received output current of the switching power supply converter. A first input end of the second hysteresis comparator is configured to receive a second detection voltage, a second input end of the second hysteresis comparator is configured to receive a second reference voltage, the second detection voltage is a voltage obtained by filtering the first detection voltage, and the second reference voltage is less than or equal to the first reference voltage. The input end of the load detection circuit is electrically connected to an output end of the switching power supply converter, and the first output end of the load detection circuit is electrically connected to the triangular wave generator.

In comparison with a conventional switching power supply converter, the load detection circuit is introduced in embodiments of this application. A change speed of an output of the switching power supply converter can be learned of based on an output of the first hysteresis comparator and an output of the second hysteresis comparator. It can be learned of, based on the output of the first hysteresis comparator, that the output of the switching power supply converter changes rapidly. It can be learned of, based on the output of the second hysteresis comparator, that the output of the switching power supply converter changes slowly. In addition, a response speed of a signal output by an EA can be controlled based on the output of the first hysteresis comparator and the output of the second hysteresis comparator in the load detection circuit.

With reference to the second not claimed aspect, in some implementations of the second aspect, the switching power supply converter further includes the error amplifier EA. A second output end of the load detection circuit is electrically connected to a control end of the EA.

In comparison with a conventional switching power supply converter, the load detection circuit is introduced in embodiments of this application. The change speed of the output of the switching power supply converter can be learned of based on the output of the first hysteresis comparator and the output of the second hysteresis comparator. It can be learned of, based on the output of the first hysteresis comparator, that the output of the switching power supply converter changes rapidly. It can be learned of, based on the output of the second hysteresis comparator, that the output of the switching power supply converter changes slowly. In addition, the response speed of the signal output by the EA can be controlled based on the output of the first hysteresis comparator and the output of the second hysteresis comparator in the load detection circuit.

With reference to the second not claimed aspect, in some implementations of the second aspect, the load detection circuit further includes a current detection circuit and a logic controller. An input end of the current detection circuit is electrically connected to the output end of the switching power supply converter, and an output end of the current detection circuit is electrically connected to the first hysteresis comparator and the second hysteresis comparator. A first input end of the logic controller is electrically connected to the output end of the first hysteresis comparator, a second input end of the logic controller is electrically connected to the output end of the second hysteresis comparator, a first output end of the logic controller is electrically connected to a control end of the triangular wave generator, and a second output end of the logic controller is electrically connected to the control end of the EA.

With reference to the second not claimed aspect, in some implementations of the second aspect, the triangular wave generator includes a variable capacitor, a variable resistor, and a triangular wave signal controller. A first end of the variable resistor is configured to receive the clock signal, a second end of the variable resistor is electrically connected to a first end of the variable capacitor and an output end of the triangular wave generator, and a control end of the variable resistor is electrically connected to an output end of the triangular wave signal controller. A second end of the variable capacitor is configured to receive an output voltage of the switching power supply converter, and a control end of the variable capacitor is electrically connected to the output end of the triangular wave signal controller. The triangular wave signal controller is configured to adjust a resistance value of the variable resistor and a capacitance value of the variable capacitor based on a fast load detection signal and a slow load detection signal that are received by the control end of the triangular wave generator.

In embodiments of this application, the triangular wave generator may adjust an amplitude of a triangular wave signal segment by segment. Adjusting the amplitude of the triangular wave signal segment by segment may be completed in one clock cycle, or in a plurality of clock cycles.

With reference to the second not claimed aspect, in some implementations of the second aspect, the triangular wave generator further includes an operational amplifier. A first input end of the operational amplifier is configured to receive a benchmark voltage, a second input end of the operational amplifier is electrically connected to an output end of the operational amplifier, and the output end of the operational amplifier is electrically connected to the first end of the variable capacitor.

With reference to the second not claimed aspect, in some implementations of the second aspect, the triangular wave generator includes an operational amplifier, a variable resistor, a variable current source, a variable current sink, a third switch, a fourth switch, and a triangular wave signal controller. A first input end of the operational amplifier is configured to receive a benchmark voltage, a second input end of the operational amplifier is electrically connected to an output end of the operational amplifier, and the output end of the operational amplifier is electrically connected to an output end of the triangular wave generator. A first end of the variable resistor is electrically connected between the third switch and the fourth switch, a second end of the variable resistor is electrically connected to the output end of the triangular wave generator, and a control end of the variable resistor is electrically connected to an output end of the triangular wave signal controller. A first end of the variable current source receives a fixed voltage, a second end of the variable current source is electrically connected to a second end of the variable current sink, and a control end of the variable current source is electrically connected to a control end of the variable current sink and the output end of the triangular wave signal controller. A first end of the variable current sink is grounded. The third switch and the fourth switch are electrically connected between the second end of the variable current source and the second end of the variable current sink, and the third switch and the fourth switch are switched based on the clock signal. The triangular wave signal controller is configured to adjust a resistance value of the variable resistor, a current value of the variable current source, and a current value of the variable current sink based on the fast load detection signal and the slow load detection signal that are received by the control end of the triangular wave generator.

In a possible but not claimed implementation, the switching power supply converter may include a plurality of first hysteresis comparators and a plurality of second hysteresis comparators, respectively outputting a plurality of fast load detection signals and a plurality of slow load detection signals. The plurality of fast load detection signals and the plurality of slow load detection signals are used to respectively adjust amplitudes of triangular wave signals corresponding to different load current ranges when the switching power supply converter is in different load current ranges. For example, a process in which the switching power supply converter changes from light load to heavy load may be divided into four load current ranges. In this case, four fast load detection signals and four slow load detection signals output by the switching power supply converter may respectively adjust amplitudes of triangular wave signals in the four load current ranges. This improves accuracy of controlling an amplitude of a triangular wave signal.

According to the invention, the triangular wave generator further includes a first switch and a second switch. The first switch is electrically connected between the variable resistor and a fixed capacitor. The second switch is electrically connected between a direct current voltage input end and the output end of the triangular wave generator. The first switch and the second switch are alternately closed.

According to the invention, the EA includes an operational amplifier, a bias current source, a compensation network, and an EA signal controller. A first input end of the operational amplifier is configured to receive an output voltage of the switching power supply converter, a second input end of the operational amplifier is configured to receive a reference voltage, and an output end of the operational amplifier is electrically connected to an output end of the EA. A first end of the compensation network is electrically connected to an output end of the operational amplifier, and a second end of the compensation network is grounded. A third input end of the operational amplifier is electrically connected to the bias current source. The EA signal controller is configured to adjust a bias current of the bias current source and a parameter of the compensation network based on the fast load detection signal and the slow load detection signal that are received by the control end of the EA.

With reference to the second but not claimed aspect, in some not claimed implementations of the second aspect, the compensation network includes a variable resistor, a first variable capacitor, and a second variable capacitor. A first end of the variable resistor is electrically connected to the output end of the operational amplifier, and a second end of the variable resistor is electrically connected to a first end of the first variable capacitor. A second end of the first variable capacitor is grounded. A first end of the second variable capacitor is electrically connected to the output end of the operational amplifier, and a second end of the second variable capacitor is grounded. A control end of the variable resistor, a control end of the first variable capacitor, and a control end of the second variable capacitor are electrically connected to an output end of the EA signal controller.

### BRIEF DESCRIPTION OF DRAWINGS

FIG. 1 is a schematic diagram of a circuit of a switching power supply converter according to an embodiment of this application;
FIG. 2 is a schematic diagram of a load detection circuit according to an embodiment of this application;
FIG. 3 is a schematic diagram of a circuit of a triangular wave generator according to an embodiment of this application;
FIG. 4 is a schematic diagram of a circuit of another triangular wave generator according to an embodiment of this application;
FIG. 5 is a schematic diagram of a circuit of still another triangular wave generator according to an embodiment of this application;
FIG. 6 is a schematic diagram of a circuit of an error amplifier EA according to an embodiment of this application;
FIG. 7 is a schematic diagram of a circuit of another error amplifier EA according to an embodiment of this application;
FIG. 8 is a schematic diagram of a relationship among a load output voltage, a signal output by an EA, a triangular wave signal, and a load output current in a switching power supply converter according to an embodiment of this application; and
FIG. 9 is a schematic diagram of a relationship among a load output voltage, a signal output by an EA, a triangular wave signal, and a load output current in a switching power supply converter according to an embodiment of this application.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Hereinafter, features which have been marked as "according to the invention" above, should be understood to belong to the invention in the description below, even if they are described, purely for the use of language of the description, as "optional" with the words "may" or "can".

### DESCRIPTION OF EMBODIMENTS

The following describes technical solutions in this application with reference to the accompanying drawings.

To facilitate understanding of this application, the following briefly describes concepts related to a switching power supply converter in this application before describing embodiments of this application.

A switching power supply converter (SMPS) may be classified into two types: an AC-DC power supply and a DC-DC power supply. The switching power supply converter usually uses a buck structure or a boost structure. Working modes of the switching power supply converter may be classified into a pulse frequency modulation (PFM) mode and a PWM mode.

A PFM mode is usually implemented by constant conduction time or a constant peak current in each switching period. A working frequency of the power supply varies with load or an input/output condition.

A PWM mode is usually implemented by a fixed frequency in each switching period. A switching duty ratio of each period varies with load or an input/output condition.

A duty ratio is a percentage of time when a circuit is connected to an entire working period of the circuit.

For ease of understanding, the following describes the switching power supply converter in embodiments of this application by using an example in which the switching power supply converter uses a buck structure. A person skilled in the art may understand that description in the following embodiments is merely an example rather than a limitation.

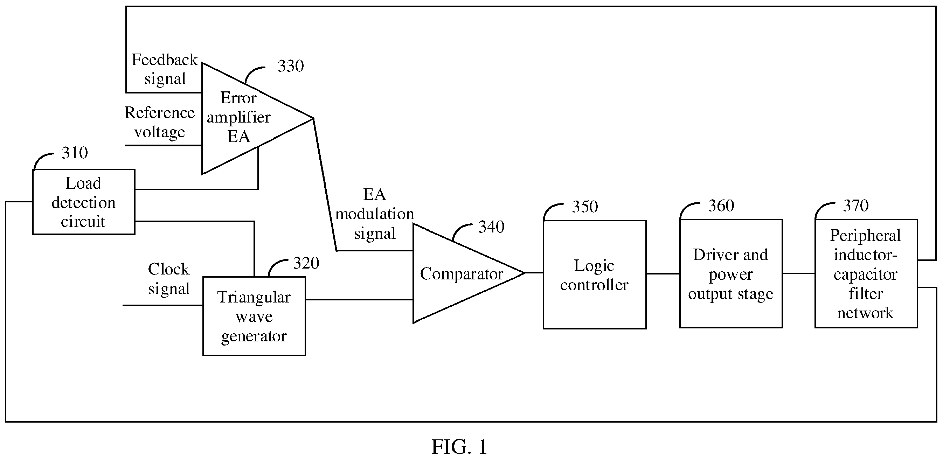

FIG. 1 is a schematic diagram of a circuit of a switching power supply converter according to an embodiment of this application.

As shown in FIG. 1, the switching power supply converter includes a load detection circuit 310, a triangular wave generator 320, an error amplifier 330, a comparator 340, a logic controller 350, a driver and power output stage 360, and a peripheral inductor-capacitor filter network 370. The load detection circuit 310 includes a current detection circuit 311, a first hysteresis comparator 312, a second hysteresis comparator 313, and a logic controller 314. An input end of the load detection circuit 310 is electrically connected to an output end of the switching power supply converter, a first output end of the load detection circuit is electrically connected to a control end of the triangular wave generator, and a second output end of the load detection circuit is electrically connected to a control end of the EA.

In embodiments of this application, the load detection circuit is configured to control, based on an output of the switching power supply converter, an amplitude of a triangular wave signal output by the triangular wave generator. The load detection circuit is further configured to control, based on the output of the switching power supply converter, a response speed of a signal output by the EA.

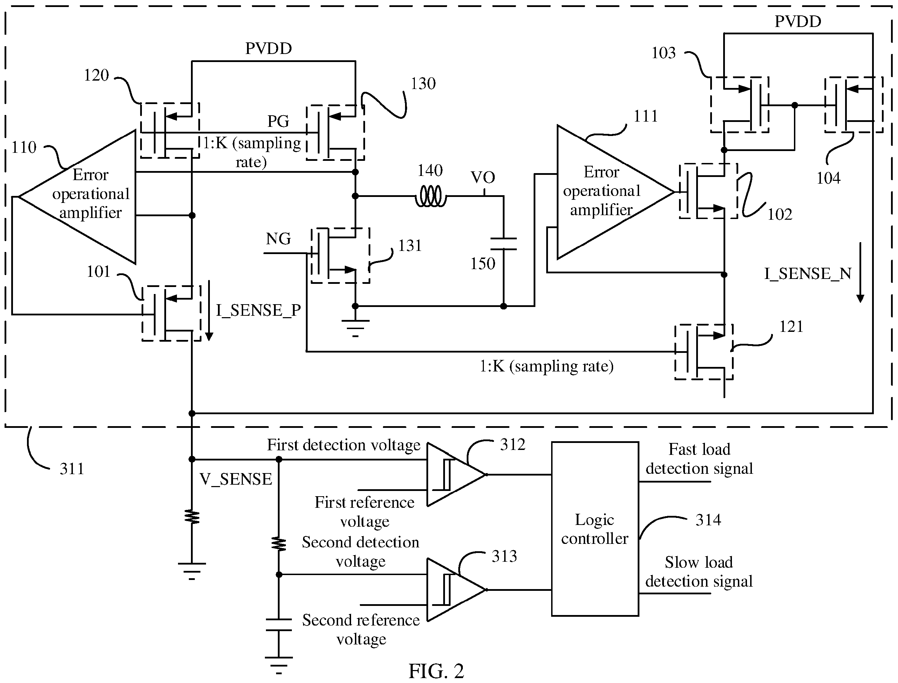

FIG. 2 is a schematic diagram of a load detection circuit according to an embodiment of this application.

As shown in FIG. 2, the current detection circuit 311 includes an adjustment transistor 101 and an adjustment transistor 102, a current mirror transistor 103 and a current mirror transistor 104, an error operational amplifier 110 and an error operational amplifier 111, a current sampling MOS transistor 120 and a current sampling MOS transistor 121, a power MOS field-effect transistor 130 and a power MOS field-effect transistor 131, an inductor 140, and a capacitor 150. An input end of the current detection circuit is electrically connected to the output end of the switching power supply converter, an output end of the current detection circuit is electrically connected to the first hysteresis comparator and the second hysteresis comparator, and the current detection circuit is configured to convert a received output current of the switching power supply converter into a voltage.

It should be understood that the adjustment transistor 101 and the adjustment transistor 102 are controlled by a loop, so that a voltage at each end of the sampling transistor is equal to a voltage at each end of the power transistor. This ensures high sampling precision. The current mirror transistor 103 and the current mirror transistor 104 are used to mirror an NMOS sampled current into a PMOS current for outputting.

For example, in the current detection circuit 311, the error operational amplifiers (the error operational amplifier 110 and the error operational amplifier 111) are used to clamp a voltage of power MOS field-effect transistors (the power MOS field-effect transistor 130 and the power MOS field-effect transistor 131) and a voltage of current sampling MOS transistors (the current sampling MOS transistor 120 and the current sampling MOS transistor 121) into a same voltage. This ensures a ratio between a sense current of the current sampling MOS transistor and a sense current of the power transistor is accurate. An input of the current detection circuit is the output current of the switching power supply converter. The output current is converted into I_SENSE currents of the P transistor and the N transistor by using the power MOS field-effect transistor and the current sampling MOS transistor, and the I_SENSE currents of the P transistor and the N transistor are converted into a V_SENSE voltage by using a resistor.

A first input end of the first hysteresis comparator 312 is configured to receive a first detection voltage, a second input end of the first hysteresis comparator is configured to receive a first reference voltage, an output end of the first hysteresis comparator is configured to output a first signal, and an output end of the first hysteresis comparator is connected to the logic controller 314. The first detection voltage is a voltage obtained after the load detection circuit converts the received output current of the switching power supply converter.

A first input end of the second hysteresis comparator 313 is configured to receive a second detection voltage, a second input end of the second hysteresis comparator is configured to receive a second reference voltage, an output end of the second hysteresis comparator is configured to output a second signal, and an output end of the second hysteresis comparator is connected to the logic controller 314. The second detection voltage is a voltage obtained by filtering the first detection voltage, and the second reference voltage is less than or equal to the first reference voltage.

In embodiments of this application, the first reference voltage may have one or more values, and the second reference voltage may have one or more values.

A first input end of the logic controller 314 is electrically connected to the output end of the first hysteresis comparator, and a second input end of the logic controller is electrically connected to the output end of the second hysteresis comparator. The logic controller is configured to receive the first signal, and generate a fast load detection signal based on the first signal. The fast load detection signal is a signal output by the load detection circuit when the output current of the switching power supply converter rises rapidly. The logic controller is further configured to receive the second signal, and generate a slow load detection signal based on the second signal. The slow load detection signal is a signal output by the load detection circuit when the output current of the switching power supply converter rises slowly. The fast load detection signal and the slow load detection signal are input signals of the control end of the triangular wave generator, or input signals of the control end of the EA.

For example, a working process of the load detection circuit in embodiments of this application is as follows.

The load detection circuit receives the output current from the switching power supply converter, and the output current is converted into a V_SENSE voltage by using the current detection circuit 311.

A first end of the first hysteresis comparator 312 is configured to receive the V_SENSE voltage, and a second end of the first hysteresis comparator 312 is configured to receive a fast load detection threshold Vth_fast and output the first signal. A first end of the second hysteresis comparator 312 is configured to receive a filtered V_SENSE voltage, and a second end of the second hysteresis comparator 312 is configured to receive a slow load detection threshold Vth_slow and output the second signal.

It should be understood that the fast load detection threshold Vth_fast may have one or more values, and the slow load detection threshold Vth_slow may have one or more values in embodiments of this application.

The logic controller is configured to: receive the first signal and the second signal, output the fast load detection signal based on the first signal, and output the slow load detection signal based on the second signal.

For example, when the V_SENSE voltage received by the first end of the first hysteresis comparator 312 is greater than the fast load detection threshold Vth_fast received by the second end of the first hysteresis comparator 312, a logical value of the first signal output by the first hysteresis comparator is 1, and a logical value of the fast load detection signal output by the logic controller based on the first signal is 1. When the filtered V_SENSE voltage received by the first end of the second hysteresis comparator 312 is less than the slow load detection threshold Vth_slow received by the second end of the second hysteresis comparator 312, a logical value of the second signal output by the second hysteresis comparator is 0, and a logical value of the slow load detection signal output by the logic controller based on the second signal is 0.

For example, when the V_SENSE voltage received by the first end of the first hysteresis comparator 312 is greater than the fast load detection threshold Vth_fast received by the second end of the first hysteresis comparator 312, a logical value of the first signal output by the first hysteresis comparator is 1, and a logical value of the fast load detection signal output by the logic controller based on the first signal is 1. When the filtered V_SENSE voltage received by the first end of the second hysteresis comparator 312 is greater than the slow load detection threshold Vth_slow received by the second end of the second hysteresis comparator 312, a logical value of the second signal output by the second hysteresis comparator is 1, and a logical value of the slow load detection signal output by the logic controller based on the second signal is 1.

For example, when the V_SENSE voltage received by the first end of the first hysteresis comparator 312 is less than the fast load detection threshold Vth_fast received by the second end of the first hysteresis comparator 312, a logical value of the first signal output by the first hysteresis comparator is 0, and a logical value of the fast load detection signal output by the logic controller based on the first signal is 0. When the filtered V_SENSE voltage received by the first end of the second hysteresis comparator 312 is greater than the slow load detection threshold Vth_slow received by the second end of the second hysteresis comparator 312, a logical value of the second signal output by the second hysteresis comparator is 1, and a logical value of the slow load detection signal output by the logic controller based on the second signal is 1.

When neither the logical value of the fast load detection signal nor the logical value of the slow load detection signal is 0, the amplitude of the triangular wave signal output by the triangular wave generator may be controlled and the response speed of the signal output by the EA may be controlled based on the fast load detection signal and the slow load detection signal. For example, when the logical value of the fast load detection signal is 1, and the logical value of the slow load detection signal is 0, the triangular wave generator is triggered to increase the amplitude of the triangular wave signal. The increased amplitude of the triangular wave signal corresponds to an amplitude of a triangular wave signal required when the loop is stable and the switching power supply converter works in a pulse width modulation mode. Alternatively, when the logical value of the fast load detection signal is 1, and the logical value of the slow load detection signal is 0, the response speed of the signal output by the EA is triggered to increase.

It should be understood that the triangular wave generator is triggered to adjust the amplitude of the triangular wave signal segment by segment in embodiments of this application. Adjusting the amplitude of the triangular wave signal segment by segment may be completed in one clock cycle, or in a plurality of clock cycles.

It should be understood that triggering the response speed of the signal output by the EA to increase in embodiments of this application includes but is not limited to increasing a gain of the signal output by the EA and increasing loop bandwidth of the signal output by the EA.

When both the logical value of the fast load detection signal and the logical value of the slow load detection signal are 0, the amplitude of the triangular wave signal is switched to or maintained a smaller amplitude of the triangular wave signal in a PFM mode, and the response speed of the signal output by the EA is switched to or maintained a faster response speed in the PFM mode.

It should be understood that the load detection circuit shown in FIG. 2 is merely an example rather than a limitation.

An input end of the triangular wave generator 320 is configured to receive a clock signal. The load detection circuit 310 is configured to control, based on the output of the switching power supply converter, the amplitude of the triangular wave signal generated by the triangular wave generator.

For example, the switching power supply converter works in the pulse frequency modulation mode, and the triangular wave generator 320 outputs a first triangular wave signal. When detecting that an output load current of the switching power supply converter transiently changes and an output voltage drops, the load detection circuit 310 controls the triangular wave generator 320 to output a second triangular wave signal. The second triangular wave signal corresponds to the pulse width modulation mode, and an amplitude of the second triangular wave signal is higher than an amplitude of the first triangular wave signal.

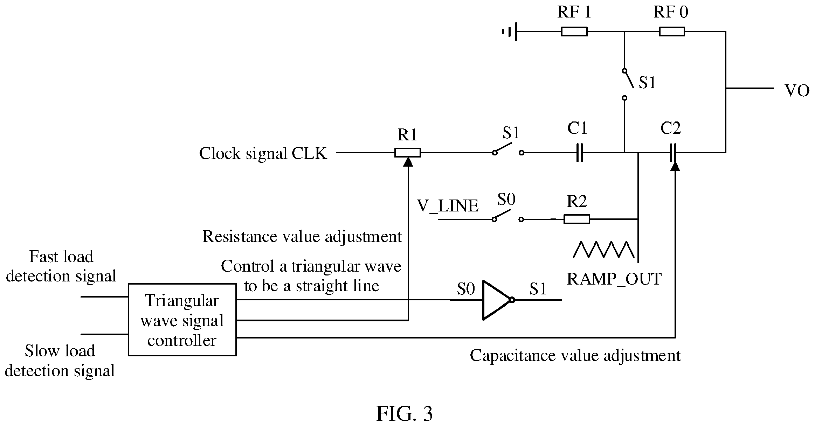

FIG. 3 to FIG. 5 show three types of triangular wave generators in embodiments of this application.

FIG. 3 is a schematic diagram of a circuit of a triangular wave generator according to an embodiment of this application.

As shown in FIG. 3, the triangular wave generator mainly includes a triangular wave signal controller, a variable resistor R1, a variable capacitor C2, a first switch S1, and a second switch S0.

The triangular wave signal controller is configured to adjust a resistance value of the variable resistor R1 and a capacitance value of the variable capacitor C2 based on a fast load detection signal and a slow load detection signal that are received by a control end of the triangular wave generator, to adjust an amplitude of a triangular wave signal.

A first end of the variable resistor R1 is configured to receive a clock signal, a second end of the variable resistor R1 is electrically connected to an output end of the triangular wave generator, and a control end of the variable resistor R1 is electrically connected to an output end of the triangular wave signal controller.

A first end of the variable capacitor C2 is electrically connected to the output end of the triangular wave generator, a second end of the variable capacitor C2 is configured to receive an output voltage of a switching power supply converter, and a control end of the variable capacitor C2 is electrically connected to the output end of the triangular wave signal controller.

The first switch S1 is electrically connected between the variable resistor R1 and a fixed capacitor C1. The second switch S0 is electrically connected between a direct current voltage V_LINE input end and the output end RAMP_OUT of the triangular wave generator. Only one of the first switch S1 and the second switch S0 can be closed at one moment. For example, an output of the triangular wave signal controller controls the first switch S1 to be closed and the second switch S0 to be open. Alternatively, an output of the triangular wave signal controller controls the second switch S0 to be closed and the first switch S1 to be open.

It should be understood that, when the first switch S1 is closed and the second switch S0 is opened, the amplitude of the triangular wave signal output by the triangular wave generator is not 0. When the first switch S1 is opened and the second switch S0 is closed, the amplitude of the triangular wave signal output by the triangular wave generator is 0. If an output voltage ripple is considered, the amplitude of the triangular wave in this case is a coupling value of the output ripple passing through the capacitor. When load of the switching power supply converter is light load, the first switch S1 may be opened, and the second switch S0 may be closed.

For example, a process in which the triangular wave generator outputs the triangular wave signal in embodiments of this application is as follows.

When the switch S1 is closed and S0 is open, a central value of the triangular wave signal output by the triangular wave generator is obtained by dividing an output voltage VO of the switching power supply converter, and the amplitude of the triangular wave signal is generated through coupling a clock signal CLK to an RC network including R1, C1, and C2. A signal output by a load detection circuit is used to control a value change of the resistor R1 or the capacitor C2, to change the amplitude of the triangular wave signal.

For another example, when the load of the switching power supply converter is light load, the switch S0 is closed, the switch S1 is open, and a direct current voltage V_LINE generates a triangular wave signal. In this case, an amplitude of the triangular wave signal is 0, that is, an output of the triangular wave generator is a straight line. If an output voltage ripple is considered, the amplitude of the triangular wave in this case is a coupling value of the output ripple passing through the capacitor.

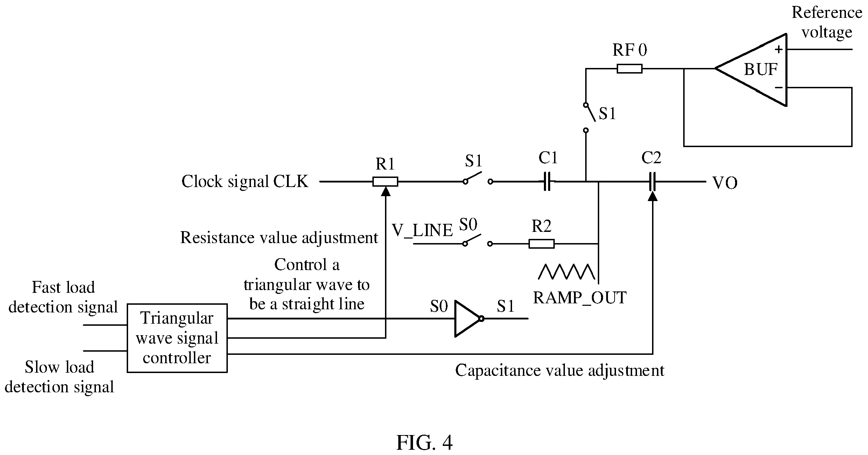

FIG. 4 is a schematic diagram of a circuit of another triangular wave generator according to an embodiment of this application.

As shown in FIG. 4, the triangular wave generator mainly includes a BUF operational amplifier, a triangular wave signal controller, a variable resistor R1, a variable capacitor C2, a first switch S1, and a second switch S0.

A first input end of the BUF operational amplifier is configured to receive a benchmark voltage VREF_CENTRE, a second input end of the BUF operational amplifier is electrically connected to an output end of the BUF operational amplifier, and the output end of the BUF operational amplifier is electrically connected to a first end of the variable capacitor C2.

The triangular wave signal controller is configured to adjust a resistance value of the variable resistor R1 and a capacitance value of the variable capacitor C2 based on a fast load detection signal and a slow load detection signal that are received by a control end of the triangular wave generator, to adjust an amplitude of a triangular wave signal.

The first switch S1 is electrically connected between the variable resistor and a fixed capacitor. The second switch S0 is electrically connected between a direct current voltage input end and an output end of the triangular wave generator. Only one of the first switch S1 and the second switch S0 can be closed at one moment.

It should be understood that, when the first switch S1 is closed and the second switch S0 is opened, the amplitude of the triangular wave signal output by the triangular wave generator is not 0. When the first switch S1 is opened and the second switch S0 is closed, the amplitude of the triangular wave signal output by the triangular wave generator is 0. If an output voltage ripple is considered, the amplitude of the triangular wave in this case is a coupling value of the output ripple passing through the capacitor. When load of a switching power supply converter is light load, the first switch S1 may be opened, and the second switch S0 may be closed.

For example, a process in which the triangular wave generator outputs the triangular wave signal in embodiments of this application is as follows.

When the switch S1 is closed and S0 is open, a central value of the triangular wave signal output by the triangular wave generator is obtained by dividing an input voltage VREF_CENTRE of the BUF operational amplifier, and the amplitude of the triangular wave signal is generated through coupling a clock signal CLK to an RC network including R1, C1, and C2. The fast load detection signal and the slow load detection signal are used to control a value change of the resistor R1 or the capacitor C2, to change the amplitude of the triangular wave signal.

For another example, when the load of the switching power supply converter is light load, the switch S0 is closed, the switch S1 is open, and a direct current voltage V_LINE generates a triangular wave signal. In this case, an amplitude of the triangular wave signal is 0, that is, an output of the triangular wave generator is a straight line. If an output voltage ripple is considered, the amplitude of the triangular wave in this case is a coupling value of the output ripple passing through the capacitor.

In an implementation, the switching power supply converter may include a plurality of first hysteresis comparators and a plurality of second hysteresis comparators, respectively outputting a plurality of fast load detection signals and a plurality of slow load detection signals. The plurality of fast load detection signals and the plurality of slow load detection signals are used to respectively adjust amplitudes of triangular wave signals corresponding to different load current ranges when the switching power supply converter is in different load current ranges. For example, a process in which the switching power supply converter changes from light load to heavy load may be divided into four load current ranges. In this case, four fast load detection signals and four slow load detection signals output by the switching power supply converter may respectively adjust amplitudes of triangular wave signals in the four load current ranges. This improves accuracy of controlling an amplitude of a triangular wave signal.

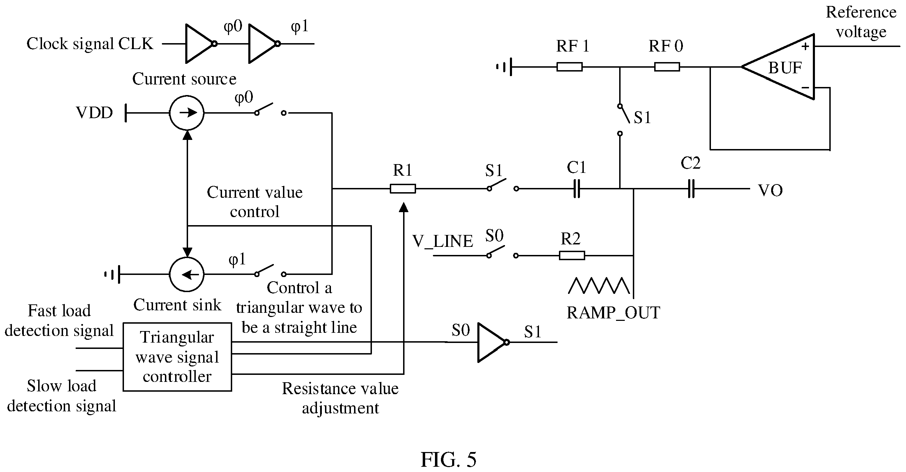

FIG. 5 is a schematic diagram of a circuit of still another triangular wave generator according to an embodiment of this application.

As shown in FIG. 5, the triangular wave generator mainly includes a BUF operational amplifier, a current source, a current sink, a triangular wave signal controller, a variable resistor R1, a first switch S1, a second switch S0, a third switch *ϕ*₀, and a fourth switch *ϕ*₁.

A first input end of the operational amplifier is configured to receive a benchmark voltage, a second input end of the operational amplifier is electrically connected to an output end of the operational amplifier, and the output end of the operational amplifier is electrically connected to an output end of the triangular wave generator.

A first end of the variable current source receives a fixed voltage VDD, a second end of the variable current source is electrically connected to a second end of the variable current sink, a control end of the variable current source is electrically connected to a control end of the variable current sink and an output end of the triangular wave signal controller, a first end of the variable current sink is grounded.

The triangular wave signal controller is configured to adjust a resistance value of the variable resistor R1, a current value of the variable current source, and a current value of the variable current sink based on a fast load detection signal and a slow load detection signal that are received by a control end of the triangular wave generator, to adjust an amplitude of a triangular wave signal.

A first end of the variable resistor R1 is electrically connected between the third switch *ϕ*₀ and the fourth switch *ϕ*₁, a second end of the variable resistor R1 is electrically connected to the output end of the triangular wave generator, and a control end of the variable resistor R1 is electrically connected to the output end of the triangular wave signal controller.

The first switch S1 is electrically connected between the variable resistor and a fixed capacitor. The second switch S0 is electrically connected between a direct current voltage input end and the output end of the triangular wave generator. Only one of the first switch S1 and the second switch S0 can be closed at one moment.

The third switch *ϕ*₀ and the fourth switch *ϕ*₁ are electrically connected between the second end of the variable current source and the second end of the variable current sink, and the third switch *ϕ*₀ and the fourth switch *ϕ*₁ are switched based on a clock signal CLK. For example, when the clock signal CLK is input as a high level to the triangular wave generator, the switch *ϕ*₀ is closed and the switch *ϕ*₁ is open. Alternatively, when the clock signal CLK is input as a high level to the triangular wave generator, the switch *ϕ*₀ is open and the switch *ϕ*₁ is closed.

For example, a process in which the triangular wave generator outputs the triangular wave signal in embodiments of this application is as follows.

The switch S1 is closed and the switch S0 is open. A central value of the triangular wave signal is provided by a fixed benchmark voltage VREF_CENTRE, and the amplitude of the triangular wave signal is generated when the clock signal CLK controls one current source and one current sink to cyclically charge and discharge an RC network including R1, C1, and C2. The fast load detection signal and the slow load detection signal are used to control a current value of the current source and a current value of the current sink or a value change of the variable resistor R1, to change the amplitude of the triangular wave signal output by the triangular wave generator.

For another example, when the switch S0 is closed, the switch S1 is open, and a direct current voltage V_LINE generates a triangular wave signal, an amplitude of the triangular wave signal is 0, that is, an output of the triangular wave generator is a straight line. If an output voltage ripple is considered, the amplitude of the triangular wave in this case is a coupling value of the output ripple passing through the capacitor.

It should be understood that triangular wave generators shown in FIG. 3 to FIG. 5 are merely an example rather than a limitation.

A first input end of the error amplifier EA 330 is configured to receive a reference voltage, and a second input end of the error amplifier EA 330 is configured to receive the output voltage of the switching power supply converter, and control, based on the output of the load detection circuit 310, the response speed of the signal output by the EA.

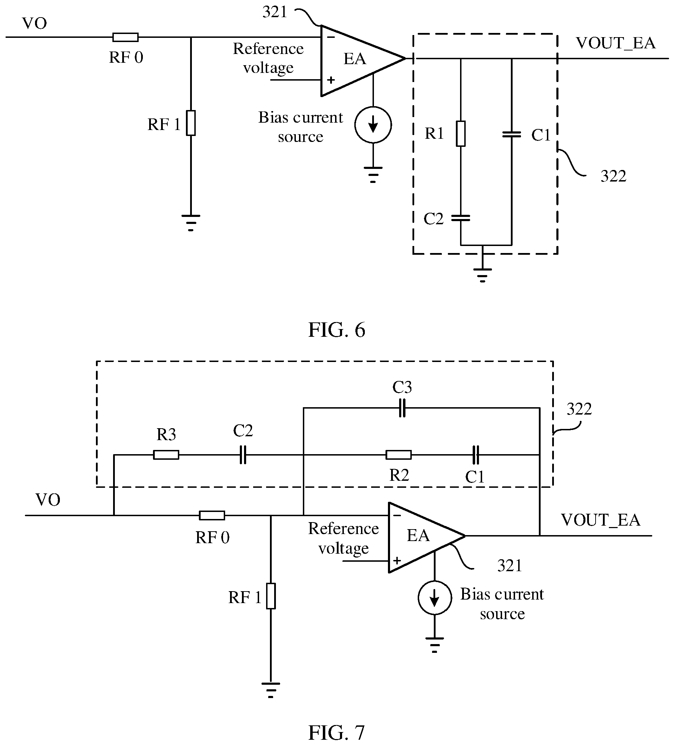

FIG. 6 and FIG. 7 show two types of error amplifiers EAs in embodiments of this application.

FIG. 6 is a schematic diagram of a circuit of an error amplifier EA according to an embodiment of this application.

As shown in FIG. 6, the error amplifier EA includes an operational amplifier 321 and a compensation network 322.

A first input end of the operational amplifier 321 is configured to receive an output voltage of the switching power supply converter, a second input end of the operational amplifier is configured to receive a reference voltage, a third input end of the operational amplifier is electrically connected to a bias current source, and an output end of the operational amplifier is electrically connected to an output end of the EA.

The compensation network 322 includes a variable resistor R1, a variable capacitor C1, and a variable capacitor C2. A first end of the compensation network is electrically connected to an output end of the operational amplifier, and a second end of the compensation network is grounded.

It should be understood that the EA further includes an EA signal controller. The EA signal controller is configured to adjust a bias current of the bias current source and a parameter of the compensation network based on the fast load detection signal and the slow load detection signal that are received by the control end of the EA.

It should be understood that FIG. 6 shows only an example of a connection relationship between the operational amplifier 321 and the compensation network 322. A resistance value of the variable resistor R1, a capacitance value of the variable capacitor C1, and a capacitance value of the variable capacitor C2 in the compensation network 322 may be all or partially adjusted by the fast load detection signal and the slow load detection signal that are output by the load detection circuit. The bias current of the bias current source may also be adjusted by the signal output by the load detection circuit, to maintain the operational amplifier 321 working normally. The bias current may flow from the bias current source to the EA, or may flow from the EA to the ground.

FIG. 7 is a schematic diagram of a circuit of another error amplifier EA according to an embodiment of this application.

As shown in FIG. 7, the error amplifier EA includes an operational amplifier 321 and a compensation network 322.

A first input end of the operational amplifier 321 is configured to receive an output voltage of the switching power supply converter, a second input end of the operational amplifier is configured to receive a reference voltage, a third input end of the operational amplifier is electrically connected to a bias current source, and an output end of the operational amplifier is electrically connected to a second end of the compensation network.

The compensation network 322 includes a variable resistor R2, a variable resistor R3, a variable capacitor C1, a variable capacitor C2, and a variable capacitor C3. A first end of the compensation network is electrically connected to the first input end of the operational amplifier, and the second end of the compensation network is connected to the output end of the operational amplifier.

It should be understood that the EA further includes an EA signal controller. The EA signal controller is configured to adjust a bias current of the bias current source and a parameter of the compensation network based on the fast load detection signal and the slow load detection signal that are received by the control end of the EA.

It should be understood that FIG. 7 shows only an example of a connection relationship between the operational amplifier 321 and the compensation network 322. Resistance values of variable resistors (R2 and R3) and capacitance values of variable capacitors (C1, C2, and C3) in the compensation network may be all or partially adjusted by the signal output by the load detection circuit. The bias current of the bias current source may be adjusted by the fast load detection signal and the slow load detection signal that are output by the load detection circuit, to maintain the operational amplifier 321 working normally. The bias current may flow from the bias current source to the EA, or may flow from the EA to the ground.

It should be understood that the error amplifiers EAs shown in FIG. 6 and FIG. 7 are merely an example rather than a limitation.

The comparator 340 is configured to receive the signal output by the error amplifier EA 330 and the triangular wave signal output by the triangular wave generator 320. The comparator 340 compares the signal output by the EA with the triangular wave signal and converts the signal into a square wave signal with a specific duty ratio, that is, an output of the comparator 340 is a PWM control signal.

Inputs of the logic controller 350 include the PWM control signal output by the comparator 340, and another logical signal required by loop control. The another logical signal required by loop control includes but is not limited to an overcurrent protection control signal, an inductor current zero-crossing detection control signal, and a loop state control signal. Outputs of the logic controller 350 are logical signals that control power transistors. The logic controller 350 processes the PWM control signal output by the comparator 340. For example, the logic controller 350 may extend a pulse width of the PWM control signal output by the comparator 340, or reduce a pulse width of the PWM control signal output by the comparator 340.

The driver and power output stage 360 includes a drive circuit, a dead-time control circuit, a power transistor circuit, an overcurrent detection circuit, a zero-crossing detection circuit, and the like. Input signals of the driver and power output stage 360 are several control signals output by the logic controller 350 for controlling an open/closed state of the power transistors. An output signal of the driver and power output stage 360 is a switching signal used to drive the peripheral inductor-capacitor filter network.

The driver and power output stage 360 processes the several control signals output by the logic controller 350, converts the control signals into power transistor gate drive signals with dead time, and then converts the power transistor gate drive signals into switching signals with power driving capabilities. In addition, an internal protection circuit can provide control signals such as an overcurrent detection signal and an inductor current zero-crossing detection signal.

Inputs of the peripheral inductor-capacitor filter network 370 are the switching signals with power driving capabilities output by the driver and power output stage 360, and outputs are DC voltage signals with specific power output capabilities and specific ripples and at specific frequencies. The peripheral inductor-capacitor filter network 370 filters switching signals with power driving capabilities, to convert the switching signals into the direct current voltage signals.

The following describes in detail a working principle of the switching power supply converter in embodiments of this application with reference to specific embodiments and FIG. 1 to FIG. 9.

In a possible implementation, when the switching power supply converter works in the pulse frequency modulation mode, load of the switching power supply converter is light load, and the triangular wave generator outputs the first triangular wave signal. The first triangular wave signal is determined based on the load of the switching power supply converter working in the pulse frequency modulation mode. When load of the switching power supply converter jumps from light load to heavy load, the switching power supply converter changes from the pulse frequency modulation mode to the pulse width modulation mode, and the triangular wave generator outputs the second triangular wave signal. The second triangular wave signal is determined based on loop stability of the switching power supply converter working in the pulse width modulation mode. The amplitude of the first triangular wave signal is less than the amplitude of the second triangular wave signal.

When load of the switching power supply converter jumps from light load to heavy load, the output voltage of the switching power supply converter drops. The amplitude of the triangular wave signal in the switching power supply converter varies with the load of the switching power supply converter, so that a larger duty ratio can be quickly obtained when the output voltage drops. This can quickly restore stability of the output voltage.

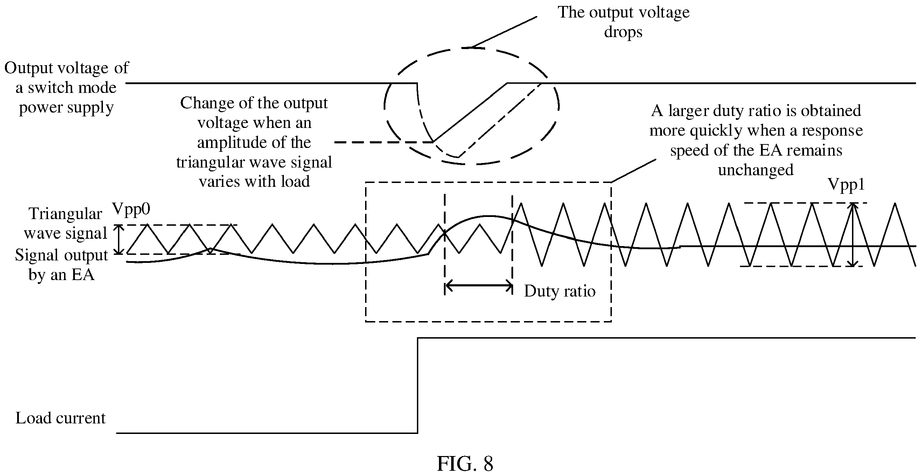

For example, when the switching power supply converter works in the pulse frequency modulation mode, the value of the fast load detection signal output by the load detection circuit based on the detected output current of the switching power supply converter is 0, and the value of the slow load detection signal is also 0. The resistance value of the variable resistor and the capacitance value of the variable capacitor in the triangular wave generator are switched to or maintain a value or a state of outputting a triangular wave with a small amplitude. Refer to FIG. 8. In this case, the triangular wave signal output by the triangular wave generator is the first triangular wave signal, and the amplitude of the first triangular wave signal is Vpp0. It should be understood that the amplitude of the first triangular wave signal corresponds to an amplitude of a triangular wave signal output by the triangular wave generator when load of the switching power supply converter is light load.

When load of the switching power supply converter jumps from light load to heavy load, that is, the output voltage of the switching power supply converter drops, and the load detection circuit detects that the output voltage of the switching power supply converter drops, the value of the output fast load detection signal is 1, and the value of the slow load detection signal is 0, and the resistance value of the variable resistor and the capacitance value of the variable capacitor in the triangular wave generator are triggered to change. Refer to FIG. 8. In this case, the triangular wave signal output by the triangular wave generator is the second triangular wave signal, and the amplitude of the second triangular wave signal is Vpp1. It should be understood that the second triangular wave signal corresponds to a triangular wave signal required when the loop is stable and the switching power supply converter works in the pulse width modulation mode.

It should be understood that the variable resistor, the variable capacitor, the current source, and the current sink in the triangular wave generator are adjusted based on the signal output by the load detection circuit, so that the triangular wave signal output by the triangular wave generator is switched from the first triangular wave signal to the second triangular wave signal.

It should be understood that, when the first triangular wave signal is switched to the second triangular wave signal in embodiments of this application, the amplitude of the triangular wave signal may be adjusted segment by segment based on a value of the load current of the switching power supply converter. Adjusting the amplitude of the triangular wave signal segment by segment may be completed in one clock cycle, or in a plurality of clock cycles. Completing adjustment in one clock cycle requires a simple circuit, but cause large output voltage jitter. Completing slow adjustment in a plurality of clock cycles cause small output voltage jitter, but requires a complex circuit.

Optionally, when the load detection circuit detects that the output load current of the switching power supply converter slowly increases, the value of the fast load detection signal output by the load detection circuit is 0, and the value of the slow load detection signal output by the load detection circuit is 1.

Optionally, when the load detection circuit detects that the output load current of the switching power supply converter slowly increases and then quickly increases, the value of the fast load detection signal output by the load detection circuit is 1, and the value of the slow load detection signal output by the load detection circuit is also 1.

Refer to FIG. 8. The amplitude of the triangular wave signal in the switching power supply converter varies with the load of the switching power supply converter in embodiments of this application, so that a larger duty ratio can be quickly obtained when the output voltage drops. This can quickly restore stability of the output voltage.

FIG. 8 is a schematic diagram of a relationship among a load output voltage, a signal output by an EA, a triangular wave signal, and a load output current in a switching power supply converter according to an embodiment of this application.

As shown in FIG. 8, when the output voltage of the switching power supply converter drops, and a response speed of the signal output by the EA remains unchanged, because an amplitude of the triangular wave signal varies with load of the switching power supply converter, that is, the amplitude of the triangular wave signal is switched from Vpp0 to Vpp1, the switching power supply converter in embodiments of this application can quickly obtain a larger duty ratio when the output voltage drops. This can quickly restore the output voltage.

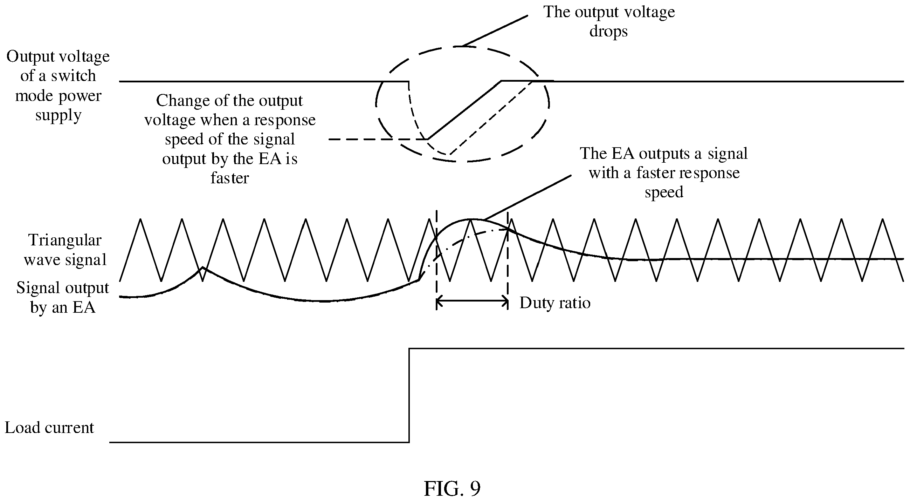

Refer to FIG. 9. In a possible embodiment, when load of the switching power supply converter in this embodiment of this application jumps from light load to heavy load, that is, when the output voltage of the switching power supply converter drops, the EA outputs a signal with a fast response speed.

When load of the switching power supply converter jumps from light load to heavy load, the output voltage of the switching power supply converter drops. The response speed of the signal output by the EA in the switching power supply converter is fast, so that a larger duty ratio can be quickly obtained when the output voltage drops. This can quickly restore stability of the output voltage.

For example, when the switching power supply converter works in a pulse frequency modulation mode, a value of a fast load detection signal output by a load detection circuit based on the detected output current of the switching power supply converter is 0, and a value of a slow load detection signal is also 0. A resistance value of a variable resistor and a capacitance value of a variable capacitor in the EA are switched to or maintain a value or a state of a fast response speed of the EA. In this case, the signal output by the EA is a first EA signal.

When load of the switching power supply converter jumps from light load to heavy load, that is, the output voltage of the switching power supply converter drops, and the load detection circuit detects that the output voltage of the switching power supply converter drops, the value of the output fast load detection signal is 1, and the value of the slow load detection signal is 0, and the resistance value of the variable resistor and the capacitance value of the variable capacitor in the EA are triggered to change. In this case, the signal output by the EA is a second EA signal, and a response speed of the first EA signal is greater than a response speed of the second EA signal.

Optionally, when the load detection circuit detects that the output load current of the switching power supply converter slowly increases, the value of the fast load detection signal output by the load detection circuit is 0, and the value of the slow load detection signal output by the load detection circuit is 1.

Optionally, when the load detection circuit detects that the output load current of the switching power supply converter slowly increases and then quickly increases, the value of the fast load detection signal output by the load detection circuit is 1, and the value of the slow load detection signal output by the load detection circuit is also 1.

Refer to FIG. 9. The response speed of the signal output by the EA in the switching power supply converter is fast in embodiments of this application, so that a larger duty ratio can be quickly obtained when the output voltage drops. This can quickly restore stability of the output voltage.

FIG. 9 is a schematic diagram of a relationship among a load output voltage, a signal output by an EA, a triangular wave signal, and a load output current in a switching power supply converter according to an embodiment of this application.

As shown in FIG. 9, when the output voltage of the switching power supply converter drops, and the triangular wave signal remains unchanged, because a response speed of the signal output by the EA is faster, the switching power supply converter in embodiments of this application can quickly obtain a larger duty ratio when the output voltage drops. This can quickly restore the output voltage.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes various media that can store program code, such as a USB flash drive, a removable hard disk drive, a read-only memory (ROM), a random access memory (RAM), a magnetic disk, and an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A switching power supply converter, comprising:
a triangular wave generator (320), wherein an input end of the triangular wave generator (320) is configured to receive a clock signal;
a load detection circuit (310), wherein an input end of the load detection circuit (310) is electrically connected to an output end of the switching power supply converter, a first output end of the load detection circuit (310) is electrically connected to a control end of the triangular wave generator (320), and the load detection circuit (310) is configured to control, based on an output of the switching power supply converter, an amplitude of a triangular wave signal output by the triangular wave generator (320); and
an error amplifier (330), EA, wherein
a second output end of the load detection circuit (310) is electrically connected to a control end of the EA, and the load detection circuit (310) is further configured to control, based on the output of the switching power supply converter, a response speed of a signal output by the EA;
wherein the load detection circuit (310) comprises a first hysteresis comparator (312) and a second hysteresis comparator (313);
a first input end of the first hysteresis comparator (312) is configured to receive an input first detection voltage, a second input end of the first hysteresis comparator (312) is configured to receive a first reference voltage, an output end of the first hysteresis comparator (312) is configured to output a first signal, and the first detection voltage is a voltage obtained after the load detection circuit (310) converts a received output current of the switching power supply converter; and
a first input end of the second hysteresis comparator (313) is configured to receive a second detection voltage, a second input end of the second hysteresis comparator (313) is configured to receive a second reference voltage, an output end of the second hysteresis comparator (313) is configured to output a second signal, the second detection voltage is a voltage obtained by filtering the first detection voltage, the second reference voltage is less than or equal to the first reference voltage, the first signal and the second signal are configured to control the amplitude of the triangular wave signal output by the triangular wave generator (320), and the signal output by
wherein the load detection circuit (310) further comprises a current detection circuit (311) and a logic controller (350; 314);
an input end of the current detection circuit (311) is electrically connected to the output end of the switching power supply converter, an output end of the current detection circuit (311) is electrically connected to the first hysteresis comparator (312) and the second hysteresis comparator (313), and the current detection circuit (311) is configured to convert a received output current of the switching power supply converter into a voltage that is received by the first hysteresis comparator (312) as the first detection voltage;
a first input end of the logic controller (350; 314) is electrically connected to the output end of the first hysteresis comparator (312), and a second input end of the logic controller (350; 314) is electrically connected to the output end of the second hysteresis comparator (313);
the logic controller (350; 314) is configured to receive the first signal, and generate a fast load detection signal based on the first signal, wherein the fast load detection signal is a signal output by the load detection circuit (310) when the output current of the switching power supply converter rises rapidly;
the logic controller (350; 314) is further configured to receive the second signal, and generate a slow load detection signal based on the second signal, wherein the slow load detection signal is a signal output by the load detection circuit (310) when the output current of the switching power supply converter rises slowly; and
the fast load detection signal and the slow load detection signal are input signals of the control end of the triangular wave generator (320), and
input signals of the control end of the EA.

2. The switching power supply converter according to claim 1, wherein the triangular wave generator (320) comprises a variable capacitor (C2), a variable resistor (R1), and a triangular wave signal controller;
a first end of the variable resistor (R1) is configured to receive the clock signal, a second end of the variable resistor (R1) is electrically connected to an output end of the triangular wave generator (320), and a control end of the variable resistor (R1) is electrically connected to an output end of the triangular wave signal controller;
a first end of the variable capacitor (C2) is electrically connected to the output end of the triangular wave generator (320), a second end of the variable capacitor (C2) is configured to receive an output voltage of the switching power supply converter, and a control end of the variable capacitor (C2) is electrically connected to the output end of the triangular wave signal controller; and
the triangular wave signal controller is configured to adjust a resistance value of the variable resistor (R1) and a capacitance value of the variable capacitor (C2) based on the fast load detection signal and the slow load detection signal that are received by the control end of the triangular wave generator (320).

3. The switching power supply converter according to claim 2, wherein the triangular wave generator (320) further comprises an operational amplifier (BUF); and
a first input end of the operational amplifier (BUF) is configured to receive a benchmark voltage, a second input end of the operational amplifier (BUF) is electrically connected to an output end of the operational amplifier (BUF), and the output end of the operational amplifier (BUF) is electrically connected to the first end of the variable capacitor (C2).

4. The switching power supply converter according to claim 1, wherein the triangular wave generator (320) comprises an operational amplifier (BUF), a variable resistor (R1), a variable current source, a variable current sink, a third switch (ϕ₀), a fourth switch (ϕ₁), and a triangular wave signal controller;
a first input end of the operational amplifier (BUF) is configured to receive a benchmark voltage, a second input end of the operational amplifier (BUF) is electrically connected to an output end of the operational amplifier (BUF), and the output end of the operational amplifier (BUF) is electrically connected to an output end of the triangular wave generator (320);
a first end of the variable resistor (R1) is electrically connected between the third switch (ϕ₀) and the fourth switch (ϕ₁), a second end of the variable resistor (R1) is electrically connected to the output end of the triangular wave generator (320), and a control end of the variable resistor (R1) is electrically connected to an output end of the triangular wave signal controller;
a first end of the variable current source receives a fixed voltage, a second end of the variable current source is electrically connected to a second end of the variable current sink, and a control end of the variable current source is electrically connected to a control end of the variable current sink and the output end of the triangular wave signal controller;
a first end of the variable current sink is grounded;
the third switch (ϕ₀) and the fourth switch (ϕ₁) are electrically connected between the second end of the variable current source and the second end of the variable current sink, and the third switch (ϕ₀) and the fourth switch (ϕ₁) are switched based on the clock signal; and
the triangular wave signal controller is configured to adjust a resistance value of the variable resistor (R1), a current value of the variable current source, and a current value of the variable current sink based on the fast load detection signal and the slow load detection signal that are received by the control end of the triangular wave generator (320).

5. The switching power supply converter according to any one of claims 2 to 4, wherein the triangular wave generator (320) further comprises a first switch (S1) and a second switch (S0);
the first switch (S1) is electrically connected between the variable resistor (R1) and a fixed capacitor;
the second switch (S0) is electrically connected between a direct current voltage input end and the output end of the triangular wave generator (320); and
the first switch (S1) and the second switch (S0) are alternately closed.

6. The switching power supply converter according to claim 1, wherein the EA comprises an operational amplifier (321), a bias current source, a compensation network (322), and an EA signal controller;
a first input end of the operational amplifier (321) is configured to receive an output voltage of the switching power supply converter, a second input end of the operational amplifier (321) is configured to receive a reference voltage, and an output end of the operational amplifier (321) is electrically connected to an output end of the EA;
a first end of the compensation network (322) is electrically connected to an output end of the operational amplifier (321), and a second end of the compensation network (322) is grounded;
a third input end of the operational amplifier (321) is electrically connected to the bias current source; and
the EA signal controller is configured to adjust a bias current of the bias current source and a parameter of the compensation network (322) based on the fast load detection signal and the slow load detection signal that are received by the control end of the EA.

## Patentansprüche

1. Schaltnetzteil-Stromwandler, umfassend:
einen Dreieckwellengenerator (320), wobei ein Eingangsende des Dreieckwellengenerators (320) dazu konfiguriert ist, ein Taktsignal zu empfangen;
eine Lasterkennungsschaltung (310), wobei ein Eingangsende der Lasterkennungsschaltung (310) elektrisch mit einem Ausgangsende des Schaltnetzteil-Stromwandlers verbunden ist, ein erstes Ausgangsende der Lasterkennungsschaltung (310) elektrisch mit einem Steuerende des Dreieckwellengenerators (320) verbunden ist und die Lasterkennungsschaltung (310) dazu konfiguriert ist, basierend auf einem Ausgang des Schaltnetzteil-Stromwandlers eine Amplitude eines durch den Dreieckwellengenerator (320) ausgegebenen Dreieckwellensignals zu steuern; und
einen Fehlerverstärker (330), EA, wobei
ein zweites Ausgangsende der Lasterkennungsschaltung (310) elektrisch mit einem Steuerende des EA verbunden ist und die Lasterkennungsschaltung (310) ferner dazu konfiguriert ist, basierend auf dem Ausgang des Schaltnetzteil-Stromwandlers eine Reaktionsgeschwindigkeit eines durch den EA ausgegebenen Signals zu steuern;
wobei die Lasterkennungsschaltung (310) einen ersten Hysteresekomparator (312) und einen zweiten Hysteresekomparator (313) umfasst;
ein erstes Eingangsende des ersten Hysteresekomparators (312) dazu konfiguriert ist, eine erste Eingangserkennungsspannung zu empfangen, ein zweites Eingangsende des ersten Hysteresekomparators (312) dazu konfiguriert ist, eine erste Referenzspannung zu empfangen, ein Ausgangsende des ersten Hysteresekomparators (312) dazu konfiguriert ist, ein erstes Signal auszugeben, und die erste Erkennungsspannung eine Spannung ist, die erlangt wird, nachdem die Lasterkennungsschaltung (310) einen empfangenen Ausgangsstrom des Schaltnetzteil-Stromwandlers umgewandelt hat; und
ein erstes Eingangsende des zweiten Hysteresekomparators (313) dazu konfiguriert ist, eine zweite Erkennungsspannung zu empfangen, ein zweites Eingangsende des zweiten Hysteresekomparators (313) dazu konfiguriert ist, eine zweite Referenzspannung zu empfangen, ein Ausgangsende des zweiten Hysteresekomparators (313) dazu konfiguriert ist, ein zweites Signal auszugeben, die zweite Erkennungsspannung eine Spannung ist, die durch Filtern der ersten Erkennungsspannung erlangt wird, die zweite Referenzspannung geringer oder gleich der ersten Referenzspannung ist, das erste Signal und das zweite Signal dazu konfiguriert sind, die Amplitude des durch den Dreieckwellengenerator (320) ausgegebenen Dreieckwellensignals und des durch den EA ausgegebenen Signals zu steuern; und
wobei die Lasterkennungsschaltung (310) ferner eine Stromerkennungsschaltung (311) und eine Logiksteuerung (350; 314) umfasst;
ein Eingangsende der Stromerkennungsschaltung (311) elektrisch mit dem Ausgangsende des Schaltnetzteil-Stromwandlers verbunden ist, ein Ausgangsende der Stromerkennungsschaltung (311) elektrisch mit dem ersten Hysteresekomparator (312) und dem zweiten Hysteresekomparator (313) verbunden ist und die Stromerkennungsschaltung (311) dazu konfiguriert ist, einen empfangenen Ausgangsstrom des Schaltnetzteil-Stromwandlers in eine Spannung umzuwandeln, die durch den ersten Hysteresekomparator (312) als die erste Erkennungsspannung empfangen wird;
ein erstes Eingangsende der Logiksteuerung (350; 314) elektrisch mit dem Ausgangsende des ersten Hysteresekomparators (312) verbunden ist und ein zweites Eingangsende der Logiksteuerung (350; 314) elektrisch mit dem Ausgangsende des zweiten Hysteresekomparators (313) verbunden ist;
die Logiksteuerung (350; 314) dazu konfiguriert ist, das erste Signal zu empfangen und basierend auf dem ersten Signal ein schnelles Lasterkennungssignal zu generieren, wobei das schnelle Lasterkennungssignal ein durch die Lasterkennungsschaltung (310) ausgegebenes Signal ist, wenn der Ausgangsstrom des Schaltnetzteil-Stromwandlers schnell ansteigt;
die Logiksteuerung (350; 314) ferner dazu konfiguriert ist, das zweite Signal zu empfangen und basierend auf dem zweiten Signal ein langsames Lasterkennungssignal zu generieren, wobei das langsame Lasterkennungssignal ein durch die Lasterkennungsschaltung (310) ausgegebenes Signal ist, wenn der Ausgangsstrom des Schaltnetzteil-Stromwandlers langsam ansteigt; und
das schnelle Lasterkennungssignal und das langsame Lasterkennungssignal Eingangssignale des Steuerendes des Dreieckwellengenerators (320) und Eingangssignale des Steuerendes des EA sind.

2. Schaltnetzteil-Stromwandler nach Anspruch 1, wobei der Dreieckwellengenerator (320) einen variablen Kondensator (C2), einen variablen Widerstand (R1) und eine Dreieckwellensignalsteuerung umfasst;
ein erstes Ende des variablen Widerstands (R1) dazu konfiguriert ist, das Taktsignal zu empfangen, ein zweites Ende des variablen Widerstands (R1) elektrisch mit einem Ausgangsende des Dreieckwellengenerators (320) verbunden ist und ein Steuerende des variablen Widerstands (R1) elektrisch mit einem Ausgangsende der Dreieckwellensignalsteuerung verbunden ist;
ein erstes Ende des variablen Kondensators (C2) elektrisch mit dem Ausgangsende des Dreieckwellengenerators (320) verbunden ist, ein zweites Ende des variablen Kondensators (C2) dazu konfiguriert ist, eine Ausgangsspannung des Schaltnetzteil-Stromwandlers zu empfangen, und ein Steuerende des variablen Kondensators (C2) elektrisch mit dem Ausgangsende der Dreieckwellensignalsteuerung verbunden ist; und
die Dreieckwellensignalsteuerung dazu konfiguriert ist, einen Widerstandswert des variablen Widerstands (R1) und einen Kapazitätswert des variablen Kondensators (C2) basierend auf dem schnellen Lasterkennungssignal und dem langsamen Lasterkennungssignal, die durch das Steuerende des Dreieckwellengenerators (320) empfangen werden, einzustellen.

3. Schaltnetzteil-Stromwandler nach Anspruch 2, wobei der Dreieckwellengenerator (320) ferner einen Operationsverstärker (BUF) umfasst; und
ein erstes Eingangsende des Operationsverstärkers (BUF) dazu konfiguriert ist, eine Richtwertspannung zu empfangen, ein zweites Eingangsende des Operationsverstärkers (BUF) elektrisch mit einem Ausgangsende des Operationsverstärkers (BUF) verbunden ist und das Ausgangsende des Operationsverstärkers (BUF) elektrisch mit dem ersten Ende des variablen Kondensators (C2) verbunden ist.

4. Schaltnetzteil-Stromwandler nach Anspruch 1, wobei der Dreieckwellengenerator (320) einen Operationsverstärker (BUF), einen variablen Widerstand (R1), eine variable Stromquelle, eine variable Stromsenke, einen dritten Schalter (ϕ₀), einen vierten Schalter (ϕ₁) und eine Dreieckwellensignalsteuerung umfasst; ein erstes Eingangsende des Operationsverstärkers (BUF) dazu konfiguriert ist, eine Richtwertspannung zu empfangen, ein zweites Eingangsende des Operationsverstärkers (BUF) elektrisch mit einem Ausgangsende des Operationsverstärkers (BUF) verbunden ist und das Ausgangsende des Operationsverstärkers (BUF) elektrisch mit einem Ausgangsende des Dreieckwellengenerators (320) verbunden ist;
ein erstes Ende des variablen Widerstands (R1) elektrisch zwischen dem dritten Schalter (ϕ₀) und dem vierten Schalter (ϕ₁) verbunden ist, ein zweites Ende des variablen Widerstands (R1) elektrisch mit dem Ausgangsende des Dreieckwellengenerators (320) verbunden ist und ein Steuerende des variablen Widerstands (R1) elektrisch mit einem Ausgangsende der Dreieckwellensignalsteuerung verbunden ist;
ein erstes Ende der variablen Stromquelle eine feste Spannung empfängt, ein zweites Ende der variablen Stromquelle elektrisch mit einem zweiten Ende der variablen Stromsenke verbunden ist und ein Steuerende der variablen Stromquelle elektrisch mit einem Steuerende der variablen Stromsenke und dem Ausgangsende der Dreieckwellensignalsteuerung verbunden ist;
ein erstes Ende der variablen Stromsenke geerdet ist;
der dritte Schalter (ϕ₀) und der vierte Schalter (ϕ₁) elektrisch zwischen dem zweiten Ende der variablen Stromquelle und dem zweiten Ende der variablen Stromsenke verbunden sind und der dritte Schalter (ϕ₀) und der vierte Schalter (ϕ₁) basierend auf dem Taktsignal geschaltet werden; und
die Dreieckwellensignalsteuerung dazu konfiguriert ist, einen Widerstandswert des variablen Widerstands (R1), einen Stromwert der variablen Stromquelle und einen Stromwert der variablen Stromsenke basierend auf dem schnellen Lasterkennungssignal und dem langsamen Lasterkennungssignal, die durch das Steuerende des Dreieckwellengenerators (320) empfangen werden, einzustellen.

5. Schaltnetzteil-Stromwandler nach einem der Ansprüche 2 bis 4, wobei der Dreieckwellengenerator (320) ferner einen ersten Schalter (S1) und einen zweiten Schalter (S0) umfasst;
der erste Schalter (S1) elektrisch zwischen dem variablen Widerstand (R1) und einem festen Kondensator verbunden ist; der zweite Schalter (S0) elektrisch zwischen einem Gleichstromspannungseingangsende und dem Ausgangsende des Dreieckwellengenerators (320) verbunden ist; und
der erste Schalter (S1) und der zweite Schalter (S0) abwechselnd geschlossen werden.

6. Schaltnetzteil-Stromwandler nach Anspruch 1, wobei der EA einen Operationsverstärker (321), eine Vorspannungsstromquelle, ein Kompensationsnetzwerk (322) und eine EA-Signalsteuerung umfasst;
ein erstes Eingangsende des Operationsverstärkers (321) dazu konfiguriert ist, eine Ausgangsspannung des Schaltnetzteil-Stromwandlers zu empfangen, ein zweites Eingangsende des Operationsverstärkers (321) dazu konfiguriert ist, eine Referenzspannung zu empfangen, und ein Ausgangsende des Operationsverstärkers (321) elektrisch mit einem Ausgangsende des EA verbunden ist;
ein erstes Ende des Kompensationsnetzwerks (322) elektrisch mit einem Ausgangsende des Operationsverstärkers (321) verbunden ist und ein zweites Ende des Kompensationsnetzwerks (322) geerdet ist;
ein drittes Eingangsende des Operationsverstärkers (321) elektrisch mit der Vorspannungsstromquelle verbunden ist; und
die EA-Signalsteuerung dazu konfiguriert ist, einen Vorspannungsstrom der Vorspannungsstromquelle und einen Parameter des Kompensationsnetzwerks (322) basierend auf dem schnellen Lasterkennungssignal und dem langsamen Lasterkennungssignal, die durch das Steuerende des EA empfangen werden, einzustellen.

## Revendications

1. Convertisseur d'alimentation à commutation, comprenant :
un générateur d'ondes triangulaires (320), dans lequel une extrémité d'entrée du générateur d'ondes triangulaires (320) est configurée pour recevoir un signal d'horloge ;
un circuit de détection de charge (310), dans lequel une extrémité d'entrée du circuit de détection de charge (310) est électriquement connectée à une extrémité de sortie du convertisseur d'alimentation à commutation, une première extrémité de sortie du circuit de détection de charge (310) est électriquement connectée à une extrémité de contrôle du générateur d'ondes triangulaires (320), et le circuit de détection de charge (310) est configuré pour contrôler, sur la base d'une sortie du convertisseur d'alimentation à commutation, une amplitude d'un signal d'onde triangulaire délivré par le générateur d'ondes triangulaires (320) ; et
un amplificateur d'erreur (330), EA, dans lequel une seconde extrémité de sortie du circuit de détection de charge (310) est connectée électriquement à une extrémité de contrôle de l'EA, et le circuit de détection de charge (310) est en outre configuré pour contrôler, sur la base de la sortie du convertisseur d'alimentation à commutation, une vitesse de réponse d'un signal émis par l'EA ;
dans lequel le circuit de détection de charge (310) comprend un premier comparateur à hystérésis (312) et un second comparateur à hystérésis (313) ;
une première extrémité d'entrée du premier comparateur à hystérésis (312) est conçue pour recevoir une première tension de détection d'entrée, une seconde extrémité d'entrée du premier comparateur à hystérésis (312) est configurée pour recevoir une première tension de référence, une extrémité de sortie du premier comparateur à hystérésis (312) est configuré pour émettre un premier signal, et la première tension de détection est une tension obtenue après que le circuit de détection de charge (310) convertit un courant de sortie reçu du convertisseur d'alimentation à commutation ; et
une première extrémité d'entrée du second comparateur à hystérésis (313) est configurée pour recevoir une seconde tension de détection, une seconde extrémité d'entrée du second comparateur à hystérésis (313) est configurée pour recevoir une seconde tension de référence, une extrémité de sortie du second comparateur à hystérésis (313) est configuré pour émettre un second signal, la seconde tension de détection est une tension obtenue par la filtration de la première tension de détection, la seconde tension de référence est inférieure ou égale à la première tension de référence, le premier signal et le second signal sont configurés pour contrôler l'amplitude du signal d'onde triangulaire émis par le générateur d'ondes triangulaires (320) et le signal émis par l'EA ; et
dans lequel le circuit de détection de charge (310) comprend en outre un circuit de détection de courant (311) et un contrôleur logique (350 ; 314) ;
une extrémité d'entrée du circuit de détection de courant (311) est connectée électriquement à l'extrémité de sortie du convertisseur d'alimentation à commutation, une extrémité de sortie du circuit de détection de courant (311) est connectée électriquement au premier comparateur à hystérésis (312) et au second comparateur à hystérésis (313), et le circuit de détection de courant (311) est configuré pour convertir un courant de sortie reçu du convertisseur d'alimentation à commutation en une tension qui est reçue par le premier comparateur à hystérésis (312) en tant que première tension de détection ;
une première extrémité d'entrée du contrôleur logique (350 ; 314) est connectée électriquement à l'extrémité de sortie du premier comparateur à hystérésis (312), et une seconde extrémité d'entrée du contrôleur logique (350 ; 314) est connectée électriquement à l'extrémité de sortie du second comparateur à hystérésis (313) ;
le contrôleur logique (350 ; 314) est configuré pour recevoir le premier signal, et générer un signal de détection de charge rapide sur la base du premier signal, dans lequel le signal de détection de charge rapide est un signal émis par le circuit de détection de charge (310) lorsque le courant de sortie du convertisseur d'alimentation à commutation augmente rapidement ;
le contrôleur logique (350 ; 314) est en outre configuré pour recevoir le second signal, et générer un signal de détection de charge lent sur la base du second signal, dans lequel le signal de détection de charge lent est un signal émis par le circuit de détection de charge (310) lorsque le courant de sortie du convertisseur d'alimentation à commutation augmente rapidement ; et
le signal de détection de charge rapide et le signal de détection de charge lente sont des signaux d'entrée de l'extrémité de contrôle du générateur d'ondes triangulaires (320), et des signaux d'entrée de l'extrémité de contrôle de l'EA.

2. Convertisseur d'alimentation à commutation selon la revendication 1, dans lequel le générateur d'ondes triangulaires (320) comprend un condensateur variable (C2), une résistance variable (R1) et un contrôleur de signal d'onde triangulaire ; une première extrémité de la résistance variable (R1) est configurée pour recevoir le signal d'horloge, une seconde extrémité de la résistance variable (R1) est connectée électriquement à une extrémité de sortie du générateur d'ondes triangulaires (320), et une extrémité de contrôle de la résistance variable (R1) est connectée électriquement à une extrémité de sortie du contrôleur de signal d'onde triangulaire ;
une première extrémité du condensateur variable (C2) est connectée électriquement à l'extrémité de sortie du générateur d'ondes triangulaires (320), une seconde extrémité du condensateur variable (C2) est configurée pour recevoir une tension de sortie du convertisseur d'alimentation à commutation,
et une extrémité de contrôle du condensateur variable (C2) est connectée électriquement à l'extrémité de sortie du contrôleur de signal à onde triangulaire ; et
le contrôleur de signal d'onde triangulaire est configuré pour ajuster une valeur de résistance de la résistance variable (R1) et une valeur de capacité du condensateur variable (C2) sur la base du signal de détection de charge rapide et du signal de détection de charge lente qui sont reçus par l'extrémité de contrôle du générateur d'ondes triangulaires (320).

3. Convertisseur d'alimentation à commutation selon la revendication 2, dans lequel le générateur d'ondes triangulaires (320) comprend en outre un amplificateur opérationnel (BUF) ; et
une première extrémité d'entrée de l'amplificateur opérationnel (BUF) est configurée pour recevoir une tension de référence, une deuxième extrémité d'entrée de l'amplificateur opérationnel (BUF) est connectée électriquement à une extrémité de sortie de l'amplificateur opérationnel (BUF), et l'extrémité de sortie de l'amplificateur opérationnel (BUF) est connecté électriquement à la première extrémité du condensateur variable (C2).

4. Convertisseur d'alimentation à commutation selon la revendication 1, dans lequel le générateur d'ondes triangulaires (320) comprend un amplificateur opérationnel (BUF), une résistance variable (R1), une source de courant variable, un puits de courant variable, un troisième commutateur (ϕ₀), un quatrième commutateur (ϕ₁) et un contrôleur de signal d'onde triangulaire ;
une première extrémité d'entrée de l'amplificateur opérationnel (BUF) est configurée pour recevoir une tension de référence, une deuxième extrémité d'entrée de l'amplificateur opérationnel (BUF) est connectée électriquement à une extrémité de sortie de l'amplificateur opérationnel (BUF), et l'extrémité de sortie de l'amplificateur opérationnel (BUF) est connectée électriquement à une extrémité de sortie du générateur d'ondes triangulaires (320) ;
une première extrémité de la résistance variable (R1) est connectée électriquement entre le troisième commutateur (ϕ₀) et le quatrième commutateur (ϕ₁), une seconde extrémité de la résistance variable (R1) est connectée électriquement à l'extrémité de sortie du générateur d'ondes triangulaires (320), et une extrémité de contrôle de la résistance variable (R1) est électriquement connectée à une extrémité de sortie du contrôleur de signal d'onde triangulaire ;
une première extrémité de la source de courant variable reçoit une tension fixe, une seconde extrémité de la source de courant variable est connectée électriquement à une seconde extrémité du puits de courant variable, et une extrémité de contrôle de la source de courant variable est connectée électriquement à une extrémité de contrôle du puits de courant variable et de l'extrémité de sortie du contrôleur de signal d'onde triangulaire ;
une première extrémité du puits de courant variable est mise à la terre ;
le troisième commutateur (ϕ₀) et le quatrième commutateur (ϕ₁) sont connectés électriquement entre la deuxième extrémité de la source de courant variable et la deuxième extrémité du puits de courant variable, et le troisième commutateur (ϕ₀) et le quatrième commutateur (ϕ₁) sont commutés sur la base du signal d'horloge ; et
le contrôleur de signal d'onde triangulaire est configuré pour ajuster une valeur de résistance de la résistance variable (R1), une valeur actuelle de la source de courant variable et une valeur actuelle du puits de courant variable sur la base du signal de détection de charge rapide et du signal de détection de charge lente qui sont reçus par l'extrémité de contrôle du générateur d'ondes triangulaires (320).

5. Convertisseur d'alimentation à commutation selon l'une quelconque des revendications 2 à 4, dans lequel le générateur d'ondes triangulaires (320) comprend en outre un premier commutateur (S1) et un deuxième commutateur (S0) ;
le premier commutateur (S1) est connecté électriquement entre la résistance variable (R1) et un condensateur fixe ;
le deuxième commutateur (S0) est connecté électriquement entre une extrémité d'entrée de tension continue et l'extrémité de sortie du générateur d'ondes triangulaires (320) ; et
le premier commutateur (S1) et le deuxième commutateur (S0) sont alternativement fermés.

6. Convertisseur d'alimentation à commutation selon la revendication 1, dans lequel l'EA comprend un amplificateur opérationnel (321), une source de courant de polarisation, un réseau de compensation (322) et un contrôleur de signal EA ;
une première extrémité d'entrée de l'amplificateur opérationnel (321) est configurée pour recevoir une tension de sortie du convertisseur d'alimentation à commutation, une deuxième extrémité d'entrée de l'amplificateur opérationnel (321) est configurée pour recevoir une tension de référence, et une extrémité de sortie de l'amplificateur opérationnel (321) est connecté électriquement à une extrémité de sortie de l'EA ;
une première extrémité du réseau de compensation (322) est connectée électriquement à une extrémité de sortie de l'amplificateur opérationnel (321), et une seconde extrémité du réseau de compensation (322) est mise à la terre ;
une troisième extrémité d'entrée de l'amplificateur opérationnel (321) est connectée électriquement à la source de courant de polarisation ; et
le contrôleur de signal EA est configuré pour ajuster un courant de polarisation de la source de courant de polarisation et un paramètre du réseau de compensation (322) sur la base du signal de détection de charge rapide et du signal de détection de charge lente qui sont reçus par l'extrémité de contrôle de l'EA.
